# EUROPEAN PATENT APPLICATION

(11) **EP 4 531 018 A1**
(43) Date of publication of application: **02.04.2025**
(21) Application number: 24200765.6
(22) Date of filing: 17.09.2024
(51) Int. Cl.: G08G 1/01, B60R 1/25, B60R 1/26, B60W 50/14, G01C 21/36, G01C 21/00, G06V 20/56, G08G 1/0962, G08G 1/0967, G08G 1/0968, G08G 1/16

(54) **CAMERA MONITOR SYSTEM WITH HAZARDOUS LOCATION WARNING FEATURES**

(30) Priority: 27.09.2023 US 202318475709
(71) Applicant: Stoneridge Electronics AB, 16903 Solna (SE)
(72) Inventor: MURTHY, Banuprakash, Novi, 48374 (US)
(74) Representative: Marks & Clerk LLP

(57) **Abstract**

A CMS for a commercial vehicle includes a vehicle camera, an electronic display, and a CMS controller. The vehicle camera is configured to record images of an environment surrounding a commercial vehicle. The electronic display includes a first display area and a second display area that is adjacent to the first display area, and a CMS controller. The CMS controller is configured to display the images on the electronic display to a driver of the commercial vehicle as a video feed that provides a first legally prescribed field of view in the first display area and provides a second legally prescribed field of view in the second display area, and obtain a list of one or more hazardous locations along a current or planned route of the commercial vehicle. Each hazardous location represents a hazardous stretch of road meeting one or more hazardous driving condition criteria. The CMS controller is also configured to, for each hazardous location in the list, based on the commercial vehicle approaching and being within a predefined distance of the hazardous location, provide a warning about the hazardous location to the driver. A method for a commercial vehicle is also disclosed.

## Description

### TECHNICAL FIELD

This disclosure relates to a camera monitoring system (CMS) for a vehicle, and specifically to a method and apparatus for utilizing the CMS to warn a driver about hazardous locations on a planned or current path of a commercial vehicle.

### BACKGROUND

Mirror replacement systems, and camera systems for supplementing mirror views, are utilized in commercial vehicles to enhance the ability of a vehicle operator to see a surrounding environment. CMSs utilize one or more cameras to provide an enhanced field of view to a vehicle operator. In some examples, the camera systems cover a larger field of view than a conventional mirror, or include views that are not fully obtainable via a conventional mirror.

Driving a commercial vehicle with a tractor and trailer can be challenging, especially at hazardous stretches of road such as blind turns (i.e., turns, such as corners, where a view of what is behind the turn / corner is obstructed), steep inclines or declines (having steep slopes), and areas of limited visibility. Such locations can be accident prone due to challenges associated with safely driving a commercial vehicle along such stretches of road.

### SUMMARY

A camera monitoring system (CMS) for a commercial vehicle according to an example embodiment of the present disclosure includes a vehicle camera, an electronic display, and a CMS controller. The vehicle camera is configured to record images of an environment surrounding a commercial vehicle. The electronic display includes a first display area and a second display area that is adjacent to the first display area, and a CMS controller. The CMS controller is configured to display the images on the electronic display to a driver of the commercial vehicle as a video feed that provides a first legally prescribed field of view in the first display area and provides a second legally prescribed field of view in the second display area, and obtain a list of one or more hazardous locations along a current or planned route of the commercial vehicle. Each hazardous location represents a hazardous stretch of road meeting one or more hazardous driving condition criteria. The CMS controller is also configured to, for each hazardous location in the list, based on the commercial vehicle being within a predefined distance of the hazardous location, provide a warning about the hazardous location to the driver.

In a further embodiment of any of the foregoing embodiments, the CMS controller is configured to further base the providing of the warning to the driver on a driving history of the driver.

In a further embodiment of any of the foregoing embodiments, the CMS controller is configured to display the warning on the electronic display.

In a further embodiment of any of the foregoing embodiments, the CMS controller is configured to display the warning as a telltale on the electronic display.

In a further embodiment of any of the foregoing embodiments, the risk level is indicated by displaying, on the electronic display, a metric indicative of how frequently vehicle accidents occur at the hazardous location.

In a further embodiment of any of the foregoing embodiments, the CMS controller is configured to provide the warning by vibrating or emitting sound from the electronic display.

In a further embodiment of any of the foregoing embodiments, the CMS controller is configured to provide the warning by transmitting the warning to vehicle speakers that are separate from the CMS.

In a further embodiment of any of the foregoing embodiments, the hazardous location includes a blind turn, has a visibility that is below a predefined visibility threshold, corresponds to a stretch of road having a slope angle that exceeds a predefined slope angle threshold, or corresponds to a stretch of road having a turn angle that exceeds a predefined turn angle threshold.

In a further embodiment of any of the foregoing embodiments, the CMS controller is also configured to, when the commercial vehicle is approaching and is within a predefined distance of the hazardous location, restrict operation of the commercial vehicle.

In a further embodiment of any of the foregoing embodiments, to restrict operation of the commercial vehicle, the CMS controller is configured to impose at least one of a maximum speed at which the commercial vehicle can travel and a maximum steering angle that the commercial vehicle may utilize.

A method for a commercial vehicle according to an example embodiment of the present disclosure includes recording images of an environment surrounding a commercial vehicle from a CMS camera having a rearward field of view; displaying the images on an electronic display of the commercial vehicle to a driver as a video feed that provides a first legally prescribed field of view in a first display area of the electronic display and provides a second legally prescribed field of view in a second display area of the electronic display that is adjacent to the first display area; and obtaining a list of one or more hazardous locations along a current or planned route of the commercial vehicle, where each hazardous location represents a hazardous stretch of road meeting one or more hazardous driving condition criteria. The method also includes, for each hazardous location in the list, based on the commercial vehicle being within a predefined distance of the hazardous location, providing a warning about the hazardous location to the driver. The displaying, obtaining, and providing are performed by a CMS controller.

In a further embodiment of any of the foregoing embodiments, the CMS controller is configured to further base the providing of the warning to the driver on a driving history of the driver.

In a further embodiment of any of the foregoing embodiments, providing the warning includes displaying the warning on the electronic display.

In a further embodiment of any of the foregoing embodiments, displaying the warning on the electronic display includes displaying the warning as a telltale on the electronic display.

In a further embodiment of any of the foregoing embodiments, indicating the risk level includes indicating a metric indicative of how frequently vehicle accidents occur at the hazardous location.

In a further embodiment of any of the foregoing embodiments, the CMS controller is configured to provide the warning by vibrating or emitting sound from the electronic display.

In a further embodiment of any of the foregoing embodiments, the CMS controller is configured to provide the warning by transmitting the warning to vehicle speakers that are separate from the CMS.

In a further embodiment of any of the foregoing embodiments, the hazardous location includes a blind turn, has a visibility that is below a predefined visibility threshold, corresponds to a stretch of road having a slope angle that exceeds a predefined slope angle threshold, or corresponds to a stretch of road having a turn angle that exceeds a predefined turn angle threshold.

In a further embodiment of any of the foregoing embodiments, the method also includes, when the commercial vehicle is approaching and is within a predefined distance of the hazardous location, restricting operation of the commercial vehicle.

In a further embodiment of any of the foregoing embodiments, restricting operation of the commercial vehicle includes imposing at least one of a maximum speed at which the commercial vehicle can travel, and a maximum steering angle that the commercial vehicle may utilize.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### BRIEF DESCRIPTION OF THE DRAWINGS

The disclosure can be further understood by reference to the following detailed description when considered in connection with the accompanying drawings wherein:
Figure 1A is a schematic front view of an example commercial truck with a CMS used to provide at least Class II and Class IV views.
Figure 1B is a schematic top elevational view of an example commercial truck with a CMS providing Class II, Class IV, Class V and Class VI views.
Figure 2A is a schematic top perspective view of an example commercial vehicle cabin including displays and interior cameras.
Figure 2B illustrates an example CMS display.
Figure 3 illustrates an example planned route of a commercial vehicle.
Figure 4 illustrates the CMS of Figures 1A-B in greater detail.
Figure 5 illustrates an example method of providing hazardous location warnings from a CMS.

### DETAILED DESCRIPTION

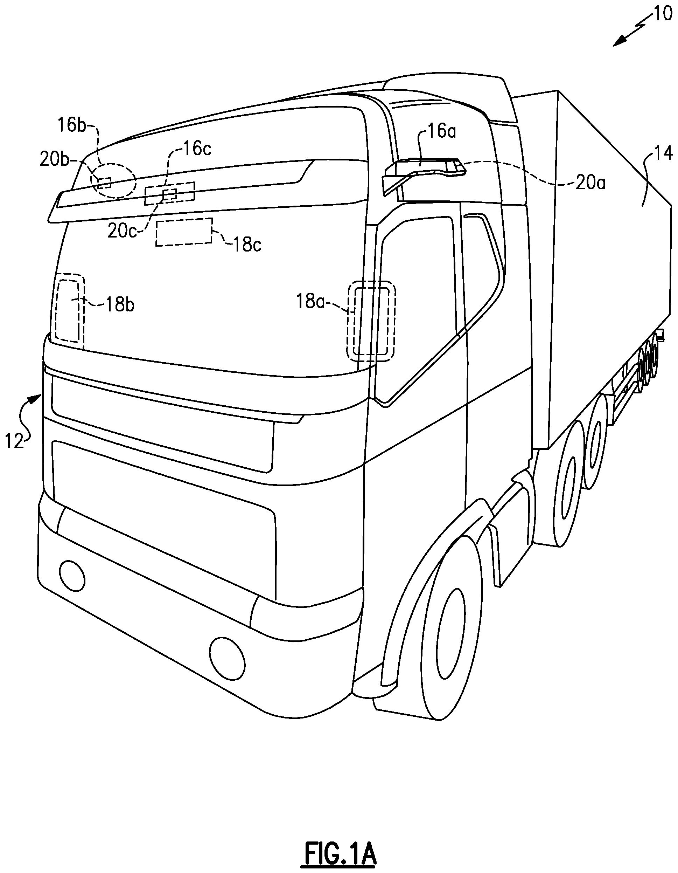

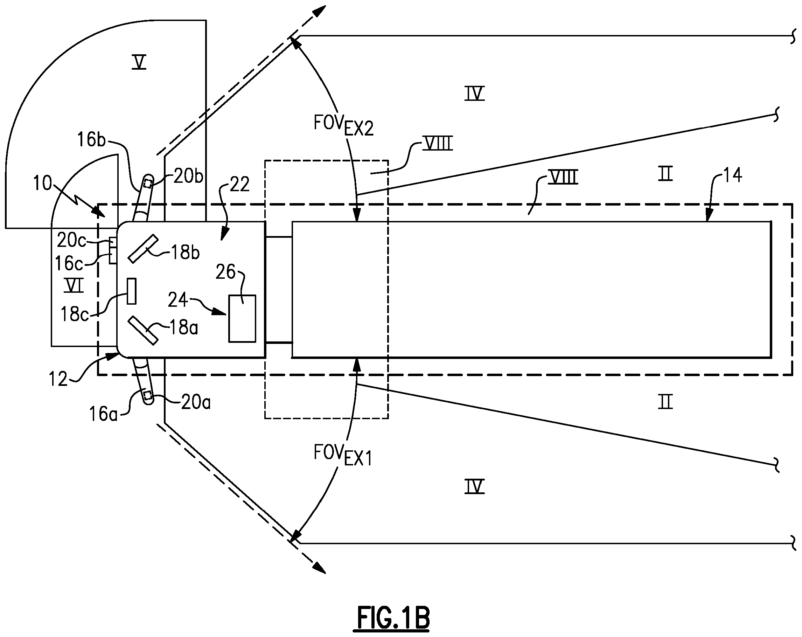

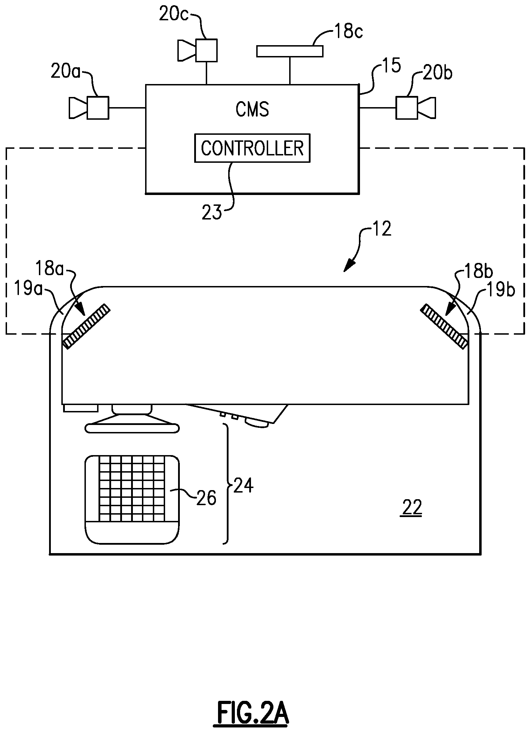

A schematic view of a commercial vehicle 10 is illustrated in Figures 1A and 1B. The commercial vehicle 10 includes a vehicle cab or tractor 12 for pulling a trailer 14. Although a commercial truck is contemplated in this disclosure, the invention may also be applied to other types of vehicles. The vehicle 10 incorporates a camera monitoring system (CMS) 15 (Fig. 2A) that has driver and passenger side camera arms 16a, 16b mounted to the outside of the vehicle cab 12. If desired, the camera arms 16a, 16b may include conventional mirrors integrated with them as well, although the CMS 15 may be used to entirely replace conventional mirrors. In additional embodiments, each side can include multiple camera arms, each arm housing one or more cameras and/or mirrors.

Each of the camera arms 16a, 16b includes a base that is secured to, for example, the cab 12. A pivoting arm is supported by the base and may articulate relative thereto. At least one rearward facing camera 20a, 20b is arranged respectively on or within the camera arms 16a, 16b. The cameras 20a, 20b are secured to the commercial vehicle 10 through the camera arms 16a, 16b. However, it is understood that the cameras 20a, 20b could be secured to the commercial vehicle in other ways. The exterior cameras 20a, 20b respectively provide an exterior field of view FOV_{EX1}, FOV_{EX2} that each include at least one of Class II and Class IV views (Fig. 1B), which are legally prescribed views in the commercial trucking industry. Multiple cameras also may be used in each camera arm 16a, 16b to provide these views, if desired. Each arm 16a, 16b may also provide a housing that encloses electronics that are configured to provide various features of the CMS 15.

First and second video displays 18a, 18b are arranged on each of the driver and passenger sides within the vehicle cab 12 on or near the A-pillars 19a, 19b to display Class II and Class IV views on its respective side of the commercial vehicle 10, which provide rear facing side views along the commercial vehicle 10 that are captured by the exterior cameras 20a, 20b.

If video of Class V and Class VI views is also desired, a camera housing 16c and camera 20c may be arranged at or near the front of the commercial vehicle 10 to provide those views (Fig. 1B). A third display 18c arranged within the cab 12 near the top center of the windshield may be used to display the Class V and Class VI views, which are toward the front of the commercial vehicle 10, to a driver in the driver seat 26.

If video of class VIII views is desired, camera housings can be disposed at the sides and rear of the commercial vehicle 10 to provide fields of view including some or all of the class VIII zones of the commercial vehicle 10. In such examples, the third display 18c may include one or more frames displaying the class VIII views. Alternatively, additional displays can be added near the first, second and third displays 18a, 18b, 18c and provide a display dedicated to providing a class VIII view. The displays 18a, 18b, 18c face a driver region 24 within the cabin 22 where a driver is seated on the driver seat 26.

The CMS includes a CMS controller 23 that includes a processor and a memory that stores instructions for configuring the CMS controller 23, which is discussed in more detail below.

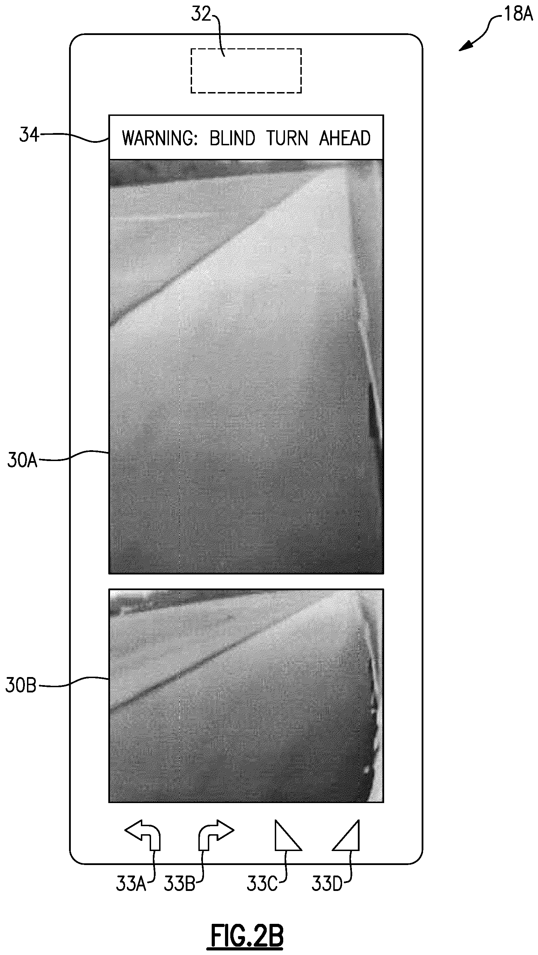

Figure 2B illustrates an example CMS display 18A, which includes a first display area 30A that provides a class II field of view, and a second display area 30B that provides a class IV field of view. The display areas 30A-B are adjacent to each other. The CMS display 18A may also include a sound-emitting device 32, such as a speaker or buzzer. Although only CMS display 18A is shown in Figure 2B, it is understood that CMS display 18B may be similarly configured to also include two display areas and in at least one example also include a sound emitting device 32. An example warning 34 ("WARNING: BLIND TURN AHEAD") is provided on the first display area 30A.

In the same or further embodiments, the CMS display 18B may also include various telltales 33A-D that may be used as follows:
- left turn telltale 33A to warn of sharp right turns or blind corner right turns;
- right turn telltale 33B to warn of sharp left turns or blind corner left turns;
- downhill telltale 33B to warn of steep downhill slope angles; and
- uphill telltale 33B to warn of steep uphill slope angles.

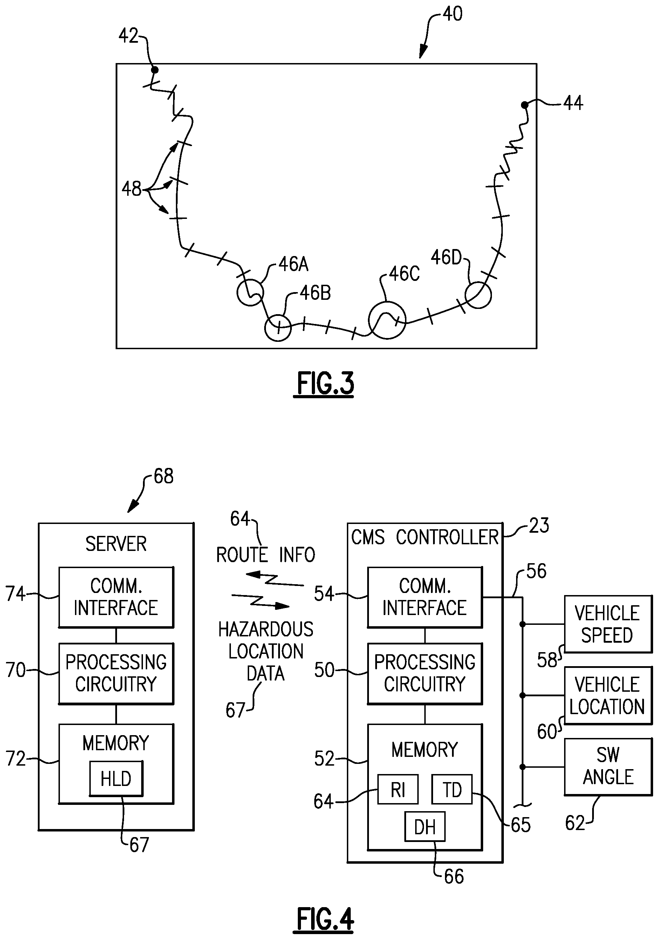

Figure 3 illustrates an example planned route 40 of a commercial vehicle that has a starting point 42 and an ending point 44. The planned route 40 includes a plurality of hazardous locations 46A-C that each represent a hazardous stretch of road meeting one or more hazardous driving condition criteria. In the example of Figure 3, location 46A is a blind turns, location 46B corresponds to a stretch of road having a visibility (i.e., weather-based visibility) that is below a predefined visibility threshold, location 46C corresponds to a stretch of road having a turn angle that exceeds a predefined turn angle threshold, and location 46D corresponds to a stretch of road having a slope angle that exceeds a predefined slope angle threshold for uphill and/or downhill driving. In one example, different slope angle thresholds are used for uphill driving and downhill driving. It is understood that these are only example hazardous locations and example hazardous driving condition criteria, and that other locations and hazardous driving condition criteria could be used.

Figure 4 illustrates the CMS controller 23 of Figures 1A-B in greater detail. As shown, the CMS controller 23 includes processing circuitry 50 operatively connected to memory 52 and a communication interface 54. The processing circuitry 50 may include one or more microprocessors, microcontrollers, application specific integrated circuits (ASICs), or the like, for example. The memory 52 can include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). Moreover, the memory 52 may incorporate electronic, magnetic, optical, and/or other types of storage media. The memory 52 can also have a distributed architecture, where various components are situated remotely from one another, but can be accessed by the processor 50. In one or more embodiments, the memory 52 stores one or more of the following: route information 64 for the commercial vehicle 10, trailer data 65, and driver history data 66.

The route information 64 describes a planned and/or current route of the commercial vehicle 10 and includes a current location of the commercial vehicle 10. The trailer data 65 describes the trailer 14 itself (e.g., trailer quantity as there may be multiple trailers connected to the cab 12, trailer height, trailer length, number of wheels), how the trailer 14 interacts with the commercial vehicle 10 (e.g., a "kingpin" position which refers to a pivot point between the cab 12 and trailer 14), and/or describes a load in the trailer 14 (e.g., load weight, load weight distribution describing how the load is distributed within the trailer 14). The trailer data 65 may be input by the driver (e.g., via communication interface 54), may be downloaded from a fleet manager, or some combination of the two, for example.

The driver history data 66 describes driving habits of the driver, such as whether the driver frequently exceeds speed limits, ignores road signs, uses a mobile phone while driving, rapidly accelerates and/or decelerates, performs a statistically high amount of hard braking, etc., and/or describes an experience level of the driver.

Although not explicitly labeled in Figure 4, it is understood that the memory 52 may also store the various thresholds discussed here (e.g., the predefined slope angle threshold, predefined turn angle threshold, predefined visibility threshold, and/or non-zero vehicle speed threshold).

The communication interface 54 is configured to facilitate communication between the CMS controller 23 and other computing devices, such as server 68, and may also be connected to other data sources in the commercial vehicle 10 via a vehicle communication bus 56 (e.g., a controller area network "CAN" bus). The communication interface 54 may also include a human-machine interface (HMI), such as a touchscreen and/or one or more user input elements such as buttons or the like for receiving input (e.g., the trailer data 65) from a user (e.g., a driver or fleet manager). In one or more embodiments, the CMS controller 23 is configured to determine a vehicle speed 58, vehicle location 60, and steering wheel angle 62 of the commercial vehicle 10 from the vehicle communication bus 56. However, it is understood that this is a non-limiting example, and that the CMS controller may obtain such information on its own (e.g., determine vehicle location 60 from its own native Global Navigation Satellite System (GNSS) and/or determine steering wheel angle 62 from analyzing images recorded by the CMS cameras 20).

The CMS controller 23 provides the route information 64 of the commercial vehicle 10 to the server 68, and in return receives hazardous location data 67 that includes a list of one or more hazardous locations that each represent a respective stretch of road on the planned route 40 that meets one or more of the hazardous driving condition criteria.

The route information 64 may describe a defined planned route that the CMS controller 23 is aware of that includes a starting point 42 and an ending point 44, or may be a route that the commercial vehicle 10 is traveling on that the CMS controller 23 can ascertain (e.g., a current highway that the CMS controller 23 is traveling on without the CMS controller 23 necessarily being aware of a larger planned route).

The server 68 includes processing circuitry 70 operatively connected to memory 72 and a communication interface 74. Here too, the processing circuitry 70 may include one or more microprocessors, microcontrollers, application specific integrated circuits (ASICs), or the like, for example. The memory 72 can include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). Moreover, the memory 72 may incorporate electronic, magnetic, optical, and/or other types of storage media. The memory 72 can also have a distributed architecture, where various components are situated remotely from one another, but can be accessed by the processor 50.

The CMS controller 23 and server 68 are configured to utilize their respective communication interfaces 54, 74 to communicate with each other (e.g., using one or more defined wireless communication protocols).

The processing circuitry 50 of the CMS controller 23 is configured to, for each hazardous location described in the list of hazardous location data 67, and based on the commercial vehicle 10 approaching and being within a predefined distance of the hazardous location 46 (i.e., approaching the hazardous location 46 and being within the predefined distance of the hazardous location 46), provide a warning about the hazardous location 46 to the driver. In one or more embodiments, the warning is displayed on one or both of the CMS displays 18A-B and/or is provided as an audible notification (e.g., as a vibration, beep, recorded sound, or spoken warning).

In one or more embodiments, the CMS controller 23 is configured to provide one or more available routes to the driver along with hazardous location data for the trip (e.g., individually listed, or summarized), to enable the driver to select which route to utilize. While a first route may be more hazardous than a second route, the driver may still want to utilize the first route since it is faster and/or because the driver has driven the first road many times and is aware of how to navigate it safely.

In addition to basing the warning on the hazardous location data 67, the CMS controller 23 may determine whether to provide a warning and may base the warning itself on a number of factors, including any one or combination of the following:
- the trailer data 65 (which as described above may describe the trailer 14 and/or the load in the trailer);
- the driver history 66;
- angle of a turn corresponding to the hazardous location data 67;
- environmental conditions along the planned and/or current route of the commercial vehicle 10 (e.g., presence of precipitation such as rain or snow; visibility due to precipitation or fog; time of day and/or available amount of daylight);
- a time of day that the driver is traveling the planned or current route of the commercial vehicle 10; and
- vehicle dynamics (e.g., vehicle speed, vehicle acceleration, vehicle steering wheel angle).

In one or more embodiments, the CMS controller utilizes a respective non-zero vehicle speed threshold for some or all of the driving hazards. Some examples may include one or more of the following:
- a first speed threshold for blind turns (i.e., only provide blind turn warning if blind turn hazardous driving criteria is satisfied and vehicle is approaching the blind corner at a speed that exceeds the first speed threshold);
- a second speed threshold for sharp turns that exceed the predefined turn angle threshold (i.e., only provide sharp turn warning if sharp turn hazardous driving criteria is satisfied and vehicle is approaching the sharp turn corner at a speed that exceeds the second speed threshold);
- a third speed threshold for uphill driving warnings (i.e., only provide uphill driving warning if the vehicle is driving on or approaching a stretch of rode having a slope angle that exceeds the uphill driving slope angle threshold at a speed that exceeds the third speed threshold);
- a fourth speed threshold for downhill driving warnings (i.e., only provide downhill driving warning if the vehicle is driving on or approaching a stretch of rode having a slope angle that exceeds the downhill slope angle threshold at a speed that exceeds the fourth speed threshold).

In one or more embodiments, the various speed thresholds have a range depending on one or more of the factors above spanning from a lower, more conservative speed threshold (e.g., for use during night driving, limited visibility driving, heavy vehicle load and/or higher tipover risk, multiple trailers, the presence of precipitation, etc.) to a higher, less conservative speed threshold (e.g., for use during day driving, non-limited visibility driving, lighter vehicle loads and/or lower tipover risk, single trailers, and the absence of precipitation). The factors (and also the driver history 66) can be weighted according to fleet manager preference, for example.

In one or more embodiments, the driver history 66 data is also considered in determining whether to provide a hazardous location warning. Some examples of this may include:
- provide more warnings to drivers having limited experience and/or whose driving history 66 that does not meet one or more safe driving criteria, and provide fewer warnings for drivers having extensive experience and/or whose driving history meets the one or more safe driving criteria; and/or
- adjust the speed thresholds so that a lower, more conservative speed thresholds are used for drivers with a limited experience and/or less safe driving history, and higher, less conservative speed thresholds are used for drivers with extensive experience and/or a safer driving history).

In one or more embodiments, some or all of the warnings are provided even if the commercial vehicle 10 is not approaching the hazardous location and is stationary (e.g., idling or parked). Some example warnings of this nature may include any one or combination of:
- any of the warnings described above (e.g., blind turn, sharp turn, etc.) with the assumption that the commercial vehicle will eventually be approaching the stretches of road to which those warnings apply; and/or
- a parking warning (e.g., a downhill parking warning or an uphill parking warning) if the vehicle is located on a stretch of road having a slope angle that exceeds a predefined slope angle parking threshold.

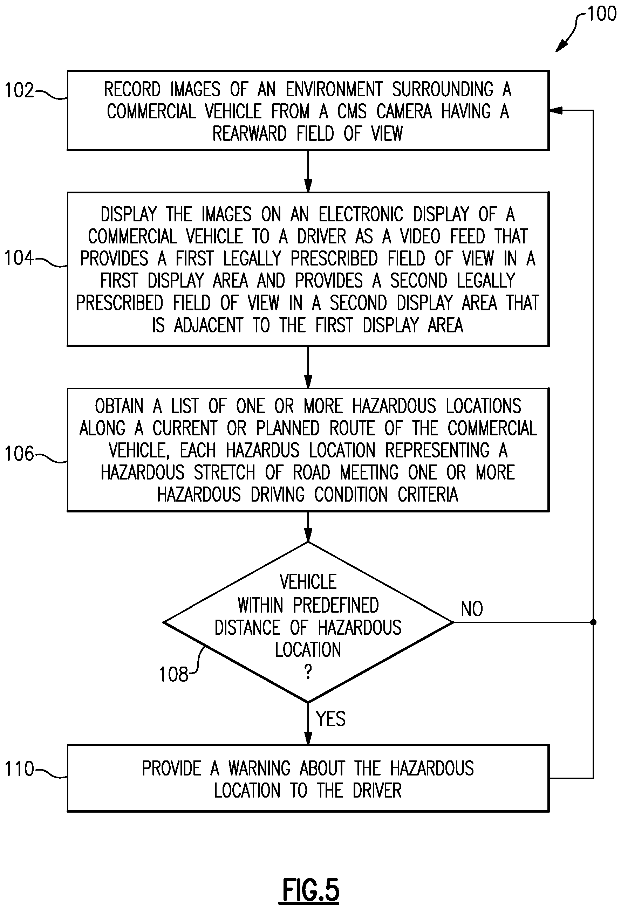

Figure 5 illustrates an example method 100 of providing warnings from a CMS 15. The method includes recording images of an environment surrounding a commercial vehicle 10 from a CMS camera 20 having a rearward field of view (e.g., a Class II or Class IV field of view) (step 102). The CMS controller 23 displays the images on an electronic display 18 of the commercial vehicle 10 to a driver as a video feed that provides a first legally prescribed field of view (e.g., a Class II view) in a first display area (e.g., first display area 30A) and provides a second legally prescribed field of view (e.g., a Class IV view) in a second display area (e.g., second display area 30B) that is adjacent to the first display area (step 104).

The CMS controller 23 obtains a list of one or more hazardous locations 46 along a current route or planned route 40 of the commercial vehicle 10, where each hazardous location represents a hazardous stretch of road meeting one or more hazardous driving condition criteria (step 106).

The CMS controller 23 determines whether the commercial vehicle 108 is approaching and is within a predefined distance of one of the one or more hazardous locations 46 (step 108). If the commercial vehicle 10 is within a predefined distance of one of the one or more hazardous locations 46 (a "yes" to block 108), the CMS controller 23 provides a warning about the hazardous location 46 to the driver (step 110). If the commercial vehicle 10 is not within a predefined distance of one of the one or more hazardous locations 46 (a "no" to block 108), then the warning of step 110 is not provided. Steps 104, 106 and 108 are performed by the CMS controller 23. In one or more embodiments, the determination of step 108 also includes the CMS controller 23 determining if the commercial vehicle 10 is approaching the hazard, and bases the warning on that as well (such as in the examples described above).

In one or more embodiments, the CMS controller 23 is configured to further base the providing of the warning in step 110 on one or more non-zero speed thresholds, as described above. The hazard(s) of some hazardous locations may only be deemed to be a concern at certain vehicle speeds (e.g., limited visibility may be deemed a non-issue is the vehicle is traveling below the vehicle speed threshold). By utilizing the non-zero vehicle speed threshold(s), the CMS controller 23 can be configured to limit the circumstances in which warnings are provided.

In one or more embodiments, the CMS controller 23 is configured to, when the commercial vehicle 10 is approaching and is within a predefined distance of the hazardous location 46, restrict operation of the commercial vehicle 10, such as by imposing a maximum speed at which the commercial vehicle can travel and/or imposing a maximum steering angle that the commercial vehicle 10 may utilize.

In one or more embodiments, providing the warning (step 110) includes displaying the warning on the electronic display 18 (e.g., as shown in the warning 34 of Figure 2B). Optionally, the displayed warning may include an indication of a risk level associated with the hazardous location (e.g., inclusion of a metric of how frequently vehicle accidents occur at the hazardous location). In one example, the warning is displayed as a telltale on the electronic display 18 and/or on another vehicle display (e.g., an instrument cluster).

In one or more embodiments, providing the warning (step 110) includes emitting sound from the sound emitting device 32 (e.g., as a vibration if the device 32 is a vibrating device, or as beep, recorded sound, or spoken warning).

In one or more embodiments, providing the warning (step 110) includes transmitting the warning to vehicle speakers that are separate from the CMS 15.

In one example, the warning includes a specific driving suggestion (e.g., do not drive more than a certain vehicle speed that is deemed acceptable at the hazardous location 46).

The CMS controller 23 may be configured to operate in a static and/or dynamic mode. In the static mode, a predefined vehicle path 40 having a starting point 42 and ending point 44 is known, and the CMS controller 23 downloads hazardous location data for the entire vehicle path 40 prior to and/or during the beginning of the route. In the dynamic mode, the CMS controller 23 is configured to transmit route information 64 to the server 68 and receive the hazardous location data 67 at predefined time intervals as represented by the tick marks 48 shown in Figure 3.

The features and techniques discussed herein provide for warning a driver about upcoming hazardous locations, and doing so using CMS hardware, which may include limited computational resources. The solution is scalable for vehicle fleets that utilize CMSs, providing for improved fleet safety and safe load delivery. Also, because CMS systems are often well-suited for retrofitting, inclusion in a CMS provides a convenient way to add hazardous location warning features to existing commercial vehicles.

Although an example embodiment has been disclosed, a worker of ordinary skill in this art would recognize that certain modifications would come within the scope of the claims. For that reason, the following claims should be studied to determine their true scope and content.

## Claims

1. A camera monitoring system (CMS) for a commercial vehicle, comprising:
a vehicle camera configured to record images of an environment surrounding a commercial vehicle;
an electronic display comprising a first display area and a second display area that is adjacent to the first display area; and
a CMS controller configured to:
display the images on the electronic display to a driver of the commercial vehicle as a video feed that provides a first legally prescribed field of view in the first display area and provides a second legally prescribed field of view in the second display area;
obtain a list of one or more hazardous locations along a current or planned route of the commercial vehicle, each hazardous location representing a hazardous stretch of road meeting one or more hazardous driving condition criteria; and
for each hazardous location in the list, based on the commercial vehicle being within a predefined distance of the hazardous location, providing a warning about said hazardous location to the driver.

2. The CMS of claim 1, wherein the CMS controller is configured to further base the providing of the warning to the driver on a driving history of the driver.

3. The CMS of claim 1 or 2, wherein the CMS controller is configured to display the warning on the electronic display, and/or wherein the CMS controller is configured to display the warning as a telltale on the electronic display.

4. The CMS of any preceding claim, wherein the CMS controller is configured to display a risk level associated with the hazardous location, optionally wherein the risk level is indicated by displaying, on the electronic display, a metric indicative of how frequently vehicle accidents occur at the hazardous location.

5. The CMS of any preceding claim, wherein the CMS controller is configured to provide the warning by vibrating or emitting sound from the electronic display.

6. The CMS of any preceding claim, wherein the CMS controller is configured to provide the warning by transmitting the warning to vehicle speakers that are separate from the CMS.

7. The CMS of any preceding claim, wherein the hazardous location includes a blind turn, has a visibility that is below a predefined visibility threshold, corresponds to a stretch of road having a slope angle that exceeds a predefined slope angle threshold, or corresponds to a stretch of road having a turn angle that exceeds a predefined turn angle threshold.

8. The CMS of any preceding claim, wherein the CMS controller is also configured to, when the commercial vehicle is approaching and is within a predefined distance of the hazardous location, restrict operation of the commercial vehicle, optionally wherein to restrict operation of the commercial vehicle, the CMS controller is configured to impose at least one of:
a maximum speed at which the commercial vehicle can travel; and
a maximum steering angle that the commercial vehicle may utilize.

9. A method for a commercial vehicle, comprising:
recording images of an environment surrounding a commercial vehicle from a camera monitor system (CMS) camera having a rearward field of view;
displaying the images on an electronic display of the commercial vehicle to a driver as a video feed that provides a first legally prescribed field of view in a first display area of the electronic display and provides a second legally prescribed field of view in a second display area of the electronic display that is adjacent to the first display area;
obtaining a list of one or more hazardous locations along a current or planned route of the commercial vehicle, each hazardous location representing a hazardous stretch of road meeting one or more hazardous driving condition criteria; and
for each hazardous location in the list, based on the commercial vehicle being within a predefined distance of the hazardous location, providing a warning about the hazardous location to the driver;
wherein said displaying, obtaining, and providing are performed by a CMS controller.

10. The method of claim 9, wherein the CMS controller is configured to further base the providing of the warning to the driver on a driving history of the driver.

11. The method of claim 9 or 10, said providing the warning comprises displaying the warning on the electronic display, optionally wherein said displaying the warning on the electronic display comprises displaying the warning as a telltale on the electronic display.

12. The method of any one of claims 9 to 11, comprising indicating a risk level associated with the hazardous location, optionally wherein said indicating the risk level comprises indicating a metric indicative of how frequently vehicle accidents occur at the hazardous location.

13. The method of any one of claims 9 to 12, wherein the CMS controller is configured to provide the warning by vibrating or emitting sound from the electronic display, and/or wherein the CMS controller is configured to provide the warning by transmitting the warning to vehicle speakers that are separate from the CMS.

14. The method of any one of claims 9 to 13, wherein the hazardous location includes a blind turn, has a visibility that is below a predefined visibility threshold, corresponds to a stretch of road having a slope angle that exceeds a predefined slope angle threshold, or corresponds to a stretch of road having a turn angle that exceeds a predefined turn angle threshold.

15. The method of any one of claims 9 to 14, comprising, when the commercial vehicle is approaching and is within a predefined distance of the hazardous location, restricting operation of the commercial vehicle, optionally wherein said restricting operation of the commercial vehicle comprises imposing at least one of:
a maximum speed at which the commercial vehicle can travel; and
a maximum steering angle that the commercial vehicle may utilize.
